# FASCICULE DE BREVET EUROPEEN

(11) **EP 2 387 693 B1**
(45) Date de publication et mention de la délivrance du brevet: **04.03.2020**
(21) Numéro de dépôt: 10703317.7
(22) Date de dépôt: 15.01.2010
(51) Int. Cl.: H02S 20/30, H02S 20/10, H02S 20/20, F24S 30/48, F24S 50/20

(54) **DISPOSITIF DE PANNEAUX SOLAIRES**
SONNENKOLLEKTOR
SOLAR PANEL DEVICE

(30) Priorité: 15.01.2009 FR 0900171; 15.01.2009 FR 0900173
(43) Date de publication de la demande: 23.11.2011
(73) Titulaire: Noglotte, Thierry, Guadeloupe (FR)
(72) Inventeur: Noglotte, Thierry, Guadeloupe (FR)
(74) Mandataire: Macquet, Christophe
(86) Numéro de dépôt international: PCT/FR2010/000036
(87) Numéro de publication internationale: WO 2010/081970

(56) Documents cités:
- DE-C1- 10 134 045
- DE-U1-202007 017 719
- US-A1- 2008 163 921

## Description

La présente invention concerne un dispositif de support de panneaux solaires. Elle concerne plus particulièrement un tel dispositif susceptible de suivre la course du soleil.

Les dispositifs susceptibles de suivre la course du soleil, appelés dispositifs de poursuite solaire, sont connus de l'art antérieur.

Ils permettent l'orientation continue des panneaux solaires face au soleil, en vue d'augmenter la production en énergie électrique. Un tel dispositif est décrit dans le document US 2008/0163921 A1 par exemple.

En pratique, le marché des dispositifs de poursuite solaire s'est développé de façon quasi-exclusive sur le marché des fermes industrielles de production.

On citera notamment les dispositifs de type sur bâti, installés au siège de la Société Solener S.A. (TM). On citera en outre les dispositifs au sol suivants. Nevada solar One (TM), qui forme une ferme commerciale de production de 64 MW de puissance ; les dispositifs mis en place dans l'usine solaire de Sol-Luce Jindovada Solar (TM) à Sacramento, Californie ; les dispositifs de la base de l'Air Force Nellis (TM), dans le Nevada ; les dispositifs mis en place à Toledo en Espagne ; les dispositifs mis en place par SOLFOCUS (TM) ; ainsi que les dispositifs du SOLAR PARK EXTREMADURAL (TM).

De tels dispositifs, qui réalisent une poursuite pour la maximisation de l'énergie produite, sont des dispositifs complexes qui, bien souvent, sont associés à des technologies qui concentrent les rayonnements solaires pour en maximiser la production d'énergie de type thermique, électrique, ou autre...

Dans certains cas, les panneaux sont orientables selon un axe unique. Dans d'autres cas, ils sont orientables selon deux axes.

Par ailleurs, à ce jour, il n'existe pas de système pour l'acquisition et le traitement de données de production d'énergie en particulier électrique, qui soit fiable et permette de récolter des données dans de vastes zones géographiques pouvant s'étendre à des régions, des pays voire au monde entier.

Pourtant, l'acquisition et le traitement de telles données pourraient permettre, en particulier, d'obtenir une meilleure connaissance de l'environnement de production d'énergie dans des zones géographiques étendues et, avantageusement, à partir de cette connaissance, de prédire la production d'énergie, la maintenance des systèmes installés et améliorer, de manière subséquente, l'exploitation de cette énergie.

Compte tenu de ce qui précède, un problème que se propose de résoudre l'objet de l'invention est de réaliser un dispositif de panneaux solaires,notamment communicants, qui puisse être installé, non seulement au sol, mais aussi sur bâti ou intégré à un bâti, en particulier, mais non exclusivement, dans les logements collectifs ou résidentiels.

La solution proposée de l'invention à ce problème a pour objet un dispositif de panneaux solaires comprenant un support d'ancrage fixe, caractérisé en ce qu'il comprend en outre un support de panneaux mobile portant au moins un panneau solaire, au moins trois vérins munis d'un corps de vérin solidaire dudit support ancrage et d'une tige mobile en translation dans ledit corps, et au moins trois rotules, chaque rotule étant solidaire, d'une part, du support de panneaux mobile et, d'autre part, de la tige des vérins, et en ce que ledit support de panneaux mobile est, d'une part, déplaçable en translation et, d'autre part, orientable selon la position respective des tiges desdits au moins trois vérins.

De manière avantageuse, - le support d'ancrage est monté sur ou intégré à un bâti ; - les panneaux solaires sont des panneaux photovoltaïques ; - le dispositif comprend au moins un capteur apte à mesurer des valeurs de paramètres fonction de l'ensoleillement ; - le ou les capteurs sont des capteurs de rayonnement, de courant, de tension ou de température ; - le dispositif comprend en outre une carte d'acquisition des valeurs de paramètres mesurées par les capteurs ; - le dispositif comprend en outre une carte de pilotage de la position des vérins selon les valeurs acquises des paramètres par la carte d'acquisition, de sorte que, au cours de la journée, les panneaux suivent la course du soleil ; - la course des vérins est contrôlée indépendamment ; et - le dispositif comporte en outre des vérins rotatifs.

De manière avantageuse, le dispositif est associé à une pluralité de serveurs locaux pour l'enregistrement de données caractéristiques des mesures de valeurs locales de paramètres directement ou indirectement fonction de et/ou liés à la quantité d'énergie reçue ou produite par lesdites dispositifs, et la transmission de telles données ;
des moyens de stockage de données centralisés et distants, pour le stockage des données transmises par les serveurs locaux ;
un premier réseau de communication pour la transmission des données de mesure locales aux serveurs locaux ; et
un second réseau de communication pour la transmission des données des serveurs locaux aux moyens de stockage centralisés.

L'invention sera mieux comprise à la lecture de la description non limitative qui va suivre, et au regard des dessins annexés, dans lesquels :
- la figure 1, schématise différents moyens mis en œuvre selon l'invention ;
- la figure 2A montre, en vue de dessus, un support d'ancrage d'un dispositif selon l'invention ;
- la figure 2B montre, en vue de dessous, un support de panneaux mobile d'un dispositif selon l'invention ;
- la figure 3 présente, de manière schématique, un dispositif selon l'invention orienté de manière particulière grâce aux moyens combinés de l'invention ; et
- la figure 4 détaille lesdits moyens d'asservissement de la course des vérins d'un dispositif selon l'invention.

Le dispositif selon l'invention est un dispositif de panneaux solaires. Ces panneaux solaires sont notamment des panneaux photovoltaïques ou des panneaux thermiques. Il peut s'agir toutefois de tous panneaux destinés à capter l'énergie du soleil ou de la renvoyer en direction d'un four comme cela est le cas dans certaines des fermes précitées de l'art antérieur.

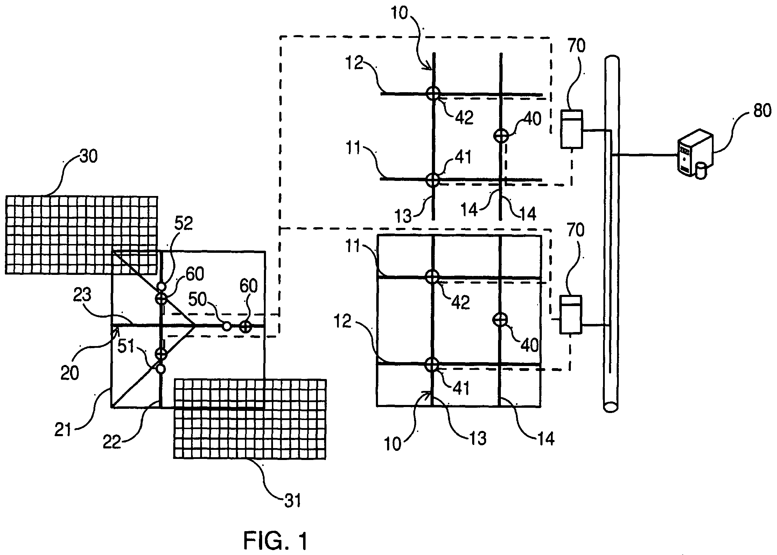

Ainsi que cela est schématisé à la figure 1, les dispositifs selon l'invention comprennent un support d'ancrage fixe 10 et un support de panneaux mobile 20.

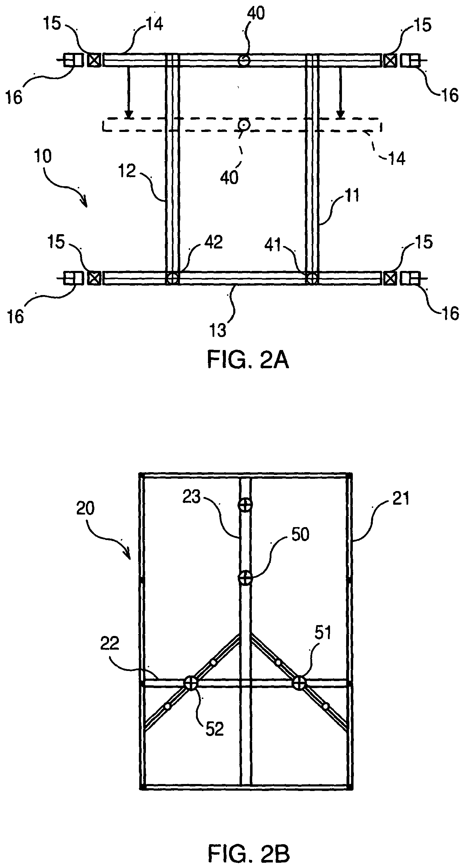

Ainsi que cela est plus particulièrement détaillé à la figure 2A, le support 10 comprend, dans un exemple de réalisation, une armature métallique rigide composée de quatre barres métalliques. Deux premières barres 11, 12 sont disposées parallèlement l'une à l'autre, dans un sens. Deux autres barres 13, 14 sont disposées parallèlement l'une à l'autre, et perpendiculairement aux deux premières barres. Le support d'ancrage 10 est assemblé sur un bâti ou intégré à un tel bâti, par exemple, d'une habitation isolée, ou alors, il est fixé au sol. Il est maintenu en place par des pattes de fixation et/ou d'ancrage 15 et des butées de d'arrêt et de blocage disposant d'un ressort de rappel 16, en particulier, lorsque le bâti sur auquel est fixé le support présente une pente. Préférentiellement, l'une des barres de l'armature, par exemple la barre 14, est déplaçable en translation le long des barres 11, 12 qui lui sont perpendiculaires, de manière à adapter le dispositif aux contraintes imposées par le bâti.

Ainsi que cela est plus particulièrement détaillé à la figure 2B, le support 20 comprend, dans un exemple de réalisation, une armature métallique rigide composée d'un cadre 21 dans lequel sont disposées des barres métalliques 22, 23.

Le support 20 porte un ou plusieurs panneaux solaires 30, 31. Dans l'exemple de la figure 1, il en porte deux. Ces panneaux solaires sont assemblés audit support 20, par des moyens d'assemblages classiques.

Par ailleurs, le dispositif selon l'invention comporte au moins trois vérins 40, 41, 42. Ces vérins sont par exemple du type hydraulique, pneumatique, mécanique ou électrique. Chaque vérin est muni d'un corps de vérin et d'une tige. La base ou la tête de chaque corps de vérin est fixée solidaire au support d'ancrage 10, par exemple vissé dans un trou taraudé, dont l'inclinaison est paramétrable, de l'armature dudit support 10. La tige de chaque vérin est munie d'une tête. Ladite tige est mobile en translation dans le corps du vérin.

L'axe des vérins, c'est-à-dire l'axe selon lequel se déplace la tige, est en général positionné verticalement, et par suite perpendiculairement au sol. L'angle d'inclinaison est réglable par rapport au plan défini par le support 10. De plus, les vérins ne sont pas positionnés alignés dans le plan dudit support. Ils sont positionnés de manière à former un triangle, par exemple un triangle isocèle, ainsi que cela apparaît notamment à la figure 2A.

Selon un mode de réalisation particulier de l'invention, les vérins ci-dessus sont couplés à des vérins rotatifs. Dans ce mode de réalisation, le support devient triaxial.

De plus, le dispositif selon l'invention comporte au moins trois rotules 50, 51, 52. Chaque rotule est solidaire d'une tige de vérin directement, ou alors indirectement, lorsque la rotule est fixée à la tête de la tige du vérin. Chaque rotule est en outre fixée solidaire au support mobile 20.

Les rotules 50, 51, 52 sont susceptibles d'être dites actives ou passives. Des rotules dites actives seraient par exemple formées de vérins rotatifs.

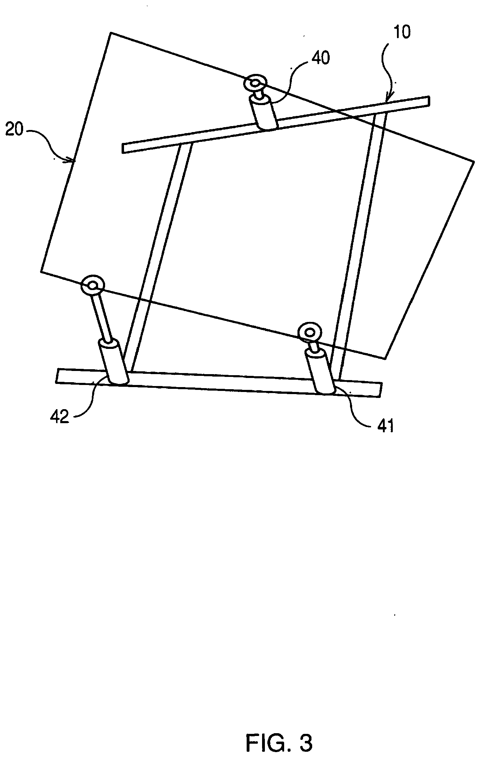

Ainsi, le support 20 surplombe le support 10 qui porte les panneaux 30, 31. En outre, ledit support 20 est orientable selon la position des vérins, et grâce aux rotules. Cela est schématisé à la figure 3. Dans cette figure, on a représenté le support 20 orienté selon une position donnée décalée par rapport à celle du support 10 d'ancrage, cette position décalée étant définie par la course différente contrôlée indépendamment des trois vérins 40, 41 et 42.

Bien entendu, les supports 10 et 20 ainsi que les autres éléments constitutifs du dispositif selon l'invention sont conçus pour résister aux différentes influences extérieures telles que la neige, les rafales de vent et l'environnement salin.

Enfin, le dispositif selon l'invention comporte des moyens d'asservissement des vérins. Ces moyens sont formés par des capteurs 60, une ou plusieurs cartes 70 d'acquisition de données et de pilotage des vérins, et un ordinateur/serveur local 80.

Plus précisément, et ainsi que cela est illustré à la figure 5, les capteurs 60 sont reliés aux cartes 70 par des moyens de connexion quelconques 90. Les cartes 70 sont elles-mêmes reliées aux vérins 40, 41, 42 par des moyens de connexion 100 qui permettent de commander ces vérins. Par ailleurs, les cartes 70 sont reliées à l'ordinateur/serveur local 80 par des moyens de connexion 110 quelconques, par exemple des câbles du type USB et un réseau local du type Ethernet.

Les capteurs 60 mesurent des valeurs de paramètres fonction de l'environnement climatique, l'ensoleillement. Ces capteurs sont par exemple des capteurs de rayonnement, de courant, de tension ou de température. Ainsi, lorsque les panneaux sont des panneaux photovoltaïques, les valeurs mesurées constituent des données de production ou d'environnement de production d'électricité, qui peuvent être recueillies selon l'invention.

A cet effet, les valeurs mesurées par les capteurs 60 sont transmises à la carte 70. Les valeurs mesurées acquises par la carte 70 sont ensuite transmises via les moyens 110, au serveur local 80, où elles sont stockées. Le serveur 80 analyse les données reçues, détermine un optimum de position des panneaux suivant la contrainte de gain maximum en énergie, puis envoie en retour à la carte 80, plus particulièrement à la partie concernant le pilotage de cette carte, des instructions de pilotage des vérins afin que l'optimum de position soit mis en œuvre. Ces instructions sont par exemple communiquées par le réseau Ethernet/USB 110 ou par courant porteur. La carte 70, qui reçoit ces instructions pilote les trois vérins 40, 41 et 42 indépendamment pour que les panneaux portés par le support 20 soient en position optimum par rapport au soleil. Les opérations ci-dessus sont effectuées sensiblement en temps réel. Par suite, les panneaux, qui suivent la course du soleil, est continue.

On notera que, selon un mode de réalisation particulier de l'invention, le dispositif est susceptible de fonctionner de manière autonome avec suivi et acquisition sans serveur/ordinateur local. Selon ce mode de réalisation, le panneau pourra, par exemple, suivre simplement la course du soleil par exemple à l'azimut. Dans ce cas, La commande des vérins est réalisée par exemple par une carte numérique interne à base d'un microcontrôleur couplé avec des capteurs (optoélectronique, courant, tension, température, ...).

La production d'énergie est alors maximisé. On estime que cette production est supérieure de 40 % à la production d'un système muni de dispositifs comprenant un même nombre de panneaux, avec une même surface, mais qui ne suivent pas la course du soleil.

Grâce à l'invention les gains en énergie notamment électrique produite sont donc sensibles.

De manière avantageuse, une pluralité de dispositifs selon l'invention est disposée sur un site de production particulier et on a une pluralité de sites comportant chacun une pluralité de dispositifs. Les sites de production sont par exemple, mais non limitativement, des résidences particulières ou d'habitations collectives.

Sur chacun des sites de production, le système selon l'invention comprend en outre un ou plusieurs capteurs locaux aptes à mesurer des valeurs de paramètres qui sont directement ou indirectement fonction de, et/ou liés à la quantité d'énergie reçue par les dispositifs locaux. Il s'agit alors notamment de capteurs de rayonnement, de courant, de tension ou de température. Plus particulièrement, les valeurs mesurées de paramètres constituent des données de production ou d'environnement de production d'électricité.

Les capteurs sont reliés à des cartes d'acquisition de données par des moyens de connexion quelconques par exemple filaires. Ces cartes ont avantageusement en outre une fonction de pilotage des vérins auxquels elles sont reliées.

De surcroît, le système selon l'invention comprend une pluralité de serveurs locaux pour l'enregistrement de données caractéristiques des mesures des valeurs des paramètres d'ensoleillement réalisées localement au moyen des capteurs et la transmission de telles données. En pratique, on a un serveur par site de production.

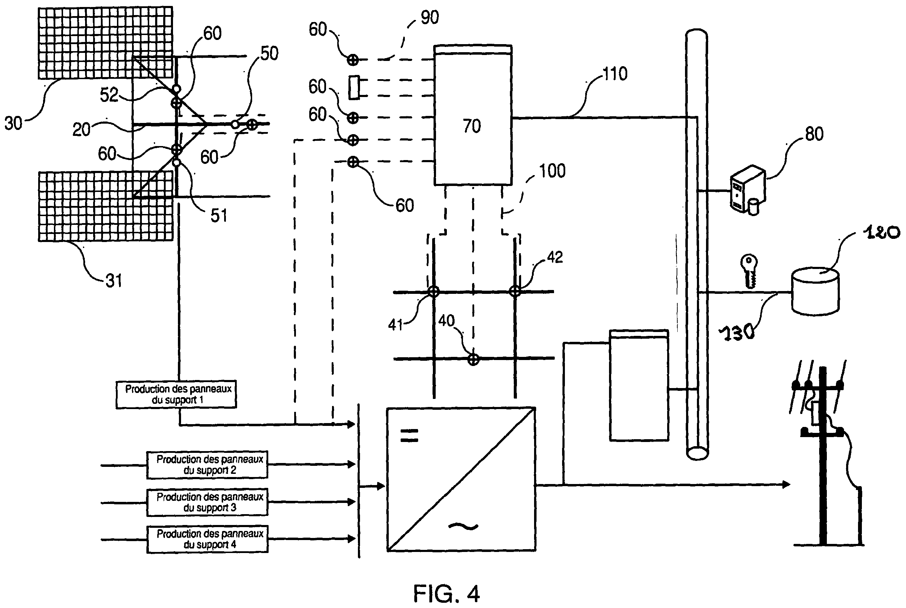

Par ailleurs, le système selon l'invention comprend des moyens centralisés 120 de stockage et de traitement des données transmises par les serveurs locaux 80 (voir Fig. 4). Ces moyens ne sont pas situés à proximité des sites de production. Cela est les cas, bien évidemment, lorsque les sites de productions sont épars sur une vaste zone géographique. Les moyens sont susceptibles d'être mis en place à un endroit quelconque dans le monde.

Enfin, le système selon l'invention comprend un premier réseau 110 de communication pour la transmission des données de mesure locales acquises par les cartes aux serveurs locaux et un second réseau 130 de communication pour la transmission des données des serveurs locaux aux moyens de stockage et de traitement centralisés, les données circulant au sein dudit second réseau étant avantageusement sécurisées, par exemple, au moyen d'un algorithme de chiffrement. Ainsi, chaque serveur local est en outre relié à la carte, en particulier aux fonctions intégrées de pilotage de ladite carte, dans le but de réaliser le pilotage des vérins et par suite de contrôler l'orientation des panneaux.

Les réseaux locaux, présents sur chaque site de production, sont par exemple des réseau locaux câblés du type Ethernet, USB, ou des réseaux fonctionnant par courant porteur, ou encore, des réseaux sans fil par exemple GSM, GPRS, UMTS ou HSPDA. Le second réseau 60 est par exemple le réseau Internet.

Les capteurs effectuent des mesures de valeurs de paramètres qui sont fonction, directement ou indirectement, de l'ensoleillement, et des conditions climatiques. Ces valeurs, acquises par les cartes mentionnées ci-dessus, sont transmises au sein du réseau local, aux serveurs locaux. Elles sont ensuite transmises, par le second réseau, à des moyens de stockage et de traitement centralisés. Ces données sont alors avantageusement traitées au niveau des moyens d'acquisition et de traitement centralisés, ou dans des moyens associés à ces moyens centralisés.

A cet effet, les moyens centralisés transmettent des instructions de pilotage des dispositifs locaux, aux serveurs locaux. Bien entendu, ces instructions sont particulières à chaque site en fonction des conditions environnementales locales notamment d'ensoleillement. Les instructions transmises au serveur local seront différentes des instructions transmises au serveur, car les sites associés à ces serveur locaux sont différents, ainsi que les conditions environnementales, l'ensoleillement à l'endroit de ces sites.

Le système met avantageusement en œuvre une Gestion de la Production Assistée par Ordinateur (GPAO) appliquée à la production d'énergie solaire notamment photovoltaïque.

Le système met en outre avantageusement en œuvre un progiciel de Gestion Technique Centralisée (Système Expert) permettant de prévoir et de détecter les pannes, de mesurer et de prévoir (prédire) la production de la centrale considérée à une date donnée. Ainsi, il est possible d'améliorer la prévision et la prédiction de la production d'électricité d'origine photovoltaïque pour chaque producteur concerné.

Le système permet de ce fait d'assurer une prédiction de la production pour chaque site de production en fonction de l'historique et de l'environnement de production.

L'invention permet en outre d'optimiser la maintenance des parcs photovoltaïques et Sécuriser le parc photovoltaïque, par le développement de systèmes experts.

On notera par ailleurs que, grâce aux moyens combinés selon l'invention, l'administration des dispositifs de panneaux solaires peut être effectuée à distance.

On notera en outre que l'énergie fournie par le dispositif selon l'invention peut être récupérée pour alimenter les vérins et les cartes dudit dispositif, qui devient ainsi autonome, en ce qui concerne sa consommation en énergie.

Bien entendu, l'invention n'est pas limitée aux modes de réalisation décrits ci-dessus. Elle doit se concevoir dans un cadre large, comme englobant tous les modes de réalisation compris dans la portée des revendications.

## Revendications

1. Dispositif de panneaux solaires comprenant un support d'ancrage (10) fixe,
**caractérisé en ce qu'**il comprend en outre
un support (20) de panneaux mobile portant au moins un panneau solaire (30, 31),
au moins trois vérins (40, 41, 42) munis d'un corps de vérin solidaire dudit support ancrage et d'une tige mobile en translation dans ledit corps, et
au moins trois rotules (50, 51, 52), chaque rotule étant solidaire, d'une part, du support de panneaux mobile et, d'autre part, de la tige des vérins,
et **en ce que** ledit support de panneaux mobile est, d'une part, déplaçable en translation et, d'autre part, orientable selon la position respective des tiges desdits au moins trois vérins.

2. Dispositif selon la revendication 1, **caractérisé en ce que** le support d'ancrage (10) est monté sur ou intégré à un bâti.

3. Dispositif selon l'une des revendications précédentes, **caractérisé en ce que** les panneaux solaires (30, 31) sont des panneaux photovoltaïques.

4. Dispositif selon l'une des revendications précédentes, **caractérisé en ce qu'**il comprend au moins un capteur (60) apte à mesurer des valeurs de paramètres fonction de l'ensoleillement.

5. Dispositif selon la revendication 4, **caractérisé en ce que** le ou les capteurs (60) sont des capteurs de rayonnement, de courant, de tension ou de température.

6. Dispositif selon l'une des revendications précédentes, **caractérisé en ce qu'**il comprend en outre une carte (70) d'acquisition des valeurs de paramètres mesurées par les capteurs

7. Dispositif selon l'une des revendications précédentes, **caractérisé en ce qu'**il comprend en outre une carte (70) de pilotage de la position des vérins (40, 41, 42) selon les valeurs acquises des paramètres par la carte d'acquisition (70), de sorte que, au cours de la journée, les panneaux (30,31) suivent la course du soleil

8. Dispositif selon l'une des revendications précédentes, **caractérisé en ce que** la course des vérins est contrôlée indépendamment.

9. Dispositif selon l'une des revendications précédentes, **caractérisé en ce qu'**il comporte en outre des vérins rotatifs.

10. Dispositif selon l'une des revendications précédentes, **caractérisé en ce qu'**il est associé à une pluralité de serveurs locaux pour l'enregistrement de données caractéristiques des mesures de valeurs locales de paramètres directement ou indirectement fonction de et/ou liés à la quantité d'énergie reçue ou produite par lesdites dispositifs, et la transmission de telles données ;
des moyens de stockage de données centralisés et distants, pour le stockage des données transmises par les serveurs locaux ;
un premier réseau de communication pour la transmission des données de mesure locales aux serveurs locaux ; et
un second réseau de communication pour la transmission des données des serveurs locaux aux moyens de stockage centralisés.

## Patentansprüche

1. Sonnenkollektorvorrichtung, eine feste Verankerungshalterung (10) umfassend,
**dadurch gekennzeichnet, dass** sie weiter Folgendes umfasst eine bewegliche Kollektorhalterung (20), die mindestens einen Sonnenkollektor (30, 31) trägt,
mindestens drei Zylinder (40, 41, 42), die mit einem Zylinderkörper, der fest mit der Verankerungshalterung verbunden ist, und einer translationsbeweglichen Stange in dem Körper versehen sind, und
mindestens drei Kugelgelenke (50, 51, 52), wobei jedes Kugelgelenk einerseits mit der beweglichen Kollektorhalterung, und andererseits mit der Stange der Zylinder fest verbunden ist,
und dadurch, dass die bewegliche Kollektorhalterung einerseits translationsverschiebbar, und andererseits in die jeweilige Position der Stangen der mindestens drei Zylinder ausrichtbar ist.

2. Vorrichtung nach Anspruch 1, **dadurch gekennzeichnet, dass** die Verankerungshalterung (10) auf einem Gestell montiert oder darin integriert ist.

3. Vorrichtung nach einem der vorstehenden Ansprüche, **dadurch gekennzeichnet, dass** die Sonnenkollektoren (30, 31) Photovoltaikkollektoren sind.

4. Vorrichtung nach einem der vorstehenden Ansprüche, **dadurch gekennzeichnet, dass** sie mindestens einen Sensor (60) umfasst, der imstande ist, Parameterwerte in Abhängigkeit vom Sonnenschein zu messen.

5. Vorrichtung nach Anspruch 4, **dadurch gekennzeichnet, dass** der oder die Sensor (en) (60) Strahlungs-, Strom-, Spannungs- oder Temperatursensoren sind.

6. Vorrichtung nach einem der vorstehenden Ansprüche, **dadurch gekennzeichnet, dass** sie weiter eine Karte (70) zum Erfassen der durch die Sensoren gemessenen Parameterwerte umfasst.

7. Vorrichtung nach einem der vorstehenden Ansprüche, **dadurch gekennzeichnet, dass** sie weiter eine Karte (70) zum Ansteuern der Position der Zylinder (40, 41, 42) gemäß den durch die Karte (70) zum Erfassen erfassten Werten der Parameter umfasst, sodass die Kollektoren (30, 31) im Laufe des Tages dem Verlauf der Sonne folgen.

8. Vorrichtung nach einem der vorstehenden Ansprüche, **dadurch gekennzeichnet, dass** der Weg der Zylinder unabhängig gesteuert wird.

9. Vorrichtung nach einem der vorstehenden Ansprüche, **dadurch gekennzeichnet, dass** sie weiter Drehzylinder beinhaltet.

10. Vorrichtung nach einem der vorstehenden Ansprüche, **dadurch gekennzeichnet, dass** sie einer Vielzahl von lokalen Servern zum Speichern von charakteristischen Daten der Messungen von lokalen Parameterwerten, die direkt oder indirekt von und/oder mit der Energiemenge abhängig und/oder verknüpft sind, die von den Vorrichtungen empfangen oder erzeugt wird, und zur Übertragung solcher Daten zugeordnet ist;
Mittel zum Ablegen zentralisierter und distanzierter Daten, zum Ablegen der durch die lokalen Server übertragenen Daten; ein erstes Kommunikationsnetzwerk für die Übertragung der lokalen Messdaten zu den lokalen Servern; und
ein zweites Kommunikationsnetzwerk für die Übertragung der Daten der lokalen Server zu den zentralisierten Ablagemitteln.

## Claims

1. Solar panel device comprising a fixed anchoring holder (10) ,
**characterised in that** it further comprises a mobile panel holder (20) bearing at least one solar panel (30, 31),
at least three jacks (40, 41, 42) provided with a jack body connected to said anchoring holder and with a mobile rod capable of translation in said body, and
at least three ball and socket joints (50, 51, 52), each ball and socket joint being connected, on the one hand, to the mobile panel holder and, on the other hand, to the rod of the jacks,
and **in that** said mobile panel holder is, on the one hand, capable of translation and, on the other hand, can be oriented according to the respective position of the rods of said at least three jacks.

2. Device according to claim 1, **characterised in that** the anchoring holder (10) is mounted on or is integrated into a frame.

3. Device according to one of the preceding claims,
**characterised in that** the solar panels (30, 31) are photovoltaic panels.

4. Device according to one of the preceding claims,
**characterised in that** it comprises at least one sensor (60) able to measure parameter values depending on the sunlight.

5. Device according to claim 4, **characterised in that** the sensor or sensors (60) are radiation, current, voltage or temperature sensors.

6. Device according to one of the preceding claims,
**characterised in that** it further comprises a card (70) for acquiring parameter values measured by the sensors.

7. Device according to one of the preceding claims,
**characterised in that** it further comprises a card (70) for controlling the position of the jacks (40, 41, 42) according to the acquired parameters values by the acquisition card (70), in such a way that, during the day, the panels (30, 31) track the course of the sun.

8. Device according to one of the preceding claims,
**characterised in that** the course of the jacks is controlled independently.

9. Device according to one of the preceding claims, **characterised in that** it further comprises rotating jacks.

10. Device according to one of the preceding claims,
**characterised in that** it is associated with a plurality of local servers for the recording of data characteristic of the measurements of the local parameter values directly or indirectly depending on and/or linked to the quantity of energy received or produced by said devices, and the transmission of such data;
centralised and remote data storage means, for the storage of the data transmitted by the local servers;
a first communication network for the transmission of the local measurement data to the local servers; and
a second communication network for the transmission of the data from the local servers to the centralised storage means.
